# EUROPÄISCHE PATENTSCHRIFT

(11) **EP 1 085 117 B1**
(45) Veröffentlichungstag und Bekanntmachung des Hinweises auf die Patenterteilung: **16.04.2003**
(21) Anmeldenummer: 00890265.2
(22) Anmeldetag: 31.08.2000
(51) Int. Cl.: D06C 21/00, D04B 1/00

(54) **Textilmaschinenfilz**
Textile machine felt
Feutre pour machine textile

(30) Priorität: 01.09.1999 AT 150699
(43) Veröffentlichungstag der Anmeldung: 21.03.2001
(73) Patentinhaber: Huyck Austria Ges. m.b.H., 2640 Glognitz (AT)
(72) Erfinder: Hauer, Wolfgang, 2640 Gloggnitz (AT)
(74) Vertreter: Matschnig, Franz, Dipl.-Ing.

(56) Entgegenhaltungen:
- EP-A- 0 295 354
- EP-A- 0 338 829
- EP-A- 0 452 185
- EP-A- 0 457 273
- DE-U- 9 416 520
- US-A- 3 948 722

## Beschreibung

Die Erfindung bezieht sich auf einen Textilmaschinenfilz, bestehend aus zumindest einem Grundgewebe und einer darauf aufgenadelten Filzlage (siehe z.B. Figur 4 der EP-A-0 295 354,

Textilmaschinenfilze dieser Art werden insbesondere als sogenannte Kompaktierfilze auf speziellen Maschinen eingesetzt, um Stoffe krumpffrei auszurüsten, wobei derartig behandelte Stoffe beim ersten Waschen de facto schrumpffrei bleiben.

Bei solchen Maschinen muß der Filz im Betrieb starke Umschlingungen durchmachen, wobei die Oberfläche des Filzes immer wieder abwechselnd gedehnt und dann wieder gestaucht wird. Durch diese starken Bewegungen ist die Oberfläche des Filzes besonders gefährdet. Es können Risse in der Struktur auftreten, die bis zu 5 mm tief in den Filz reichen und die Lebensdauer des Textilmaschinenfilzes begrenzen. Im Hinblick auf die Kosten des Filzes und die mit seiner Auswechslung verbundene Standzeiten sollte die Lebensdauer jedoch mindestens 1½-2 Jahre betragen.

Es hat sich auch gezeigt, dass die Lebensdauer nicht nur durch die genannten Bewegungen vermindert wird, sondern auch durch andere Einflüsse auf den Filz, wie Reste von Säurefarbstoffen, Bleichmittel, die aus den zu behandelnden Stoffen in den Filz eingebracht werden etc.

Eine Aufgabe der Erfindung liegt darin, eine Textilmaschinenfilz zu schaffen, der gegen die genannten Einwirkungen widerstandsfähiger ist und dadurch eine höhere Lebensdauer aufweist.

Diese Aufgabe läßt sich mit einem Textilmaschinenfilz der eingangs genannten Art lösen, bei welchem erfindungsgemäß die Filzlage zumindest in ihrem Oberflächenbereich eine elastische Maschenware enthält.

Diese Maschenware wirkt zwar versteifend und sichernd auf die Oberfläche des Filzes, doch wird die Bewegung der Oberfläche des Filzes aufgrund der Elastizität der Maschenware nicht beschränkt. Mit anderen Worten, es wird die Oberflächenelastizität des Textilmaschinenfilzes beibehalten und doch die Oberflächenstruktur zusammengehalten.

Eine in der Praxis zweckmäßige Ausführungsform zeichnet sich dadurch aus, dass die Maschenware ein endlos gewirkter Schlauch ist.

Vorteilhaft ist es weiters, wenn die Maschenware aus Polyesterfasern besteht, da diese den mechanischen und chemischen Anforderungen besonders gut entsprechen.

Es hat sich als zweckmäßig erwiesen, wenn die Maschenware unter Bildung einer obersten Schicht auf die Oberfläche der Filzlage aufgenadelt ist, da sich dadurch die Herstellung des Textilmaschinenfilzes vereinfacht, und dieser ohnedies einem Nadelungsprozess unterworfen werden muß, bei welchem die Filzlage auf das Grundgewebe aufgenadelt wird. Eine besondere Widerstandsfähigkeit erhält man dabei, wenn die Maschenware mit Aramidfasern auf die Filzlage aufgenadelt ist.

Die gewünschte Festigkeit einerseits und die Elastizität des gesamten Texilmaschinenfilzes andererseits erhält man, wenn das Grundgewebe aus einem Monofilament und einem darüber gelegenen Multifilament besteht, wobei zweckmäßigerweise das Grundgewebe ein Polyestergewebe ist.

Gegenstand der Erfindung ist weiters die Verwendung eines Textilmaschinenfilzes der oben gekennzeichneten Art als Kompaktierfilz auf Maschinen zur Krumpffreibehandlung von Textilien.

Die Erfindung samt weiteren Vorteilen wird im folgenden anhand einer beispielsweisen Ausführungsform näher erläutert, die in der Zeichnung veranschaulicht ist.

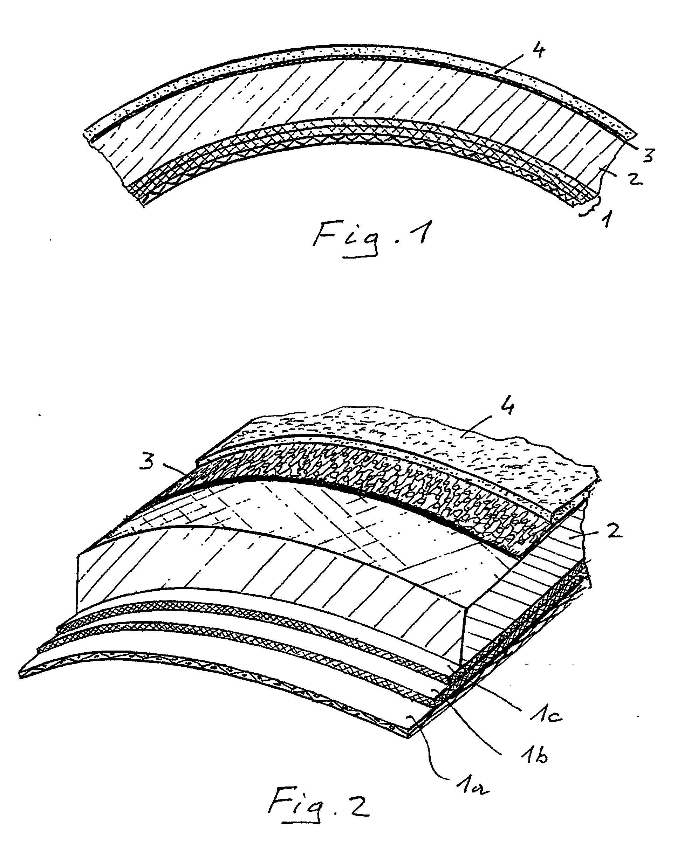

In dieser zeigen
■ Fig. 1 einen einen Schnitt durch ein Textilmaschinenfilz nach der Erfindung, und
■ Fig. 2 den Aufbau eines solchen Filzes in perspektivischer Darstellung.

Wie Fig. 1 und Fig. 2 zeigen, besteht ein Textilmaschinenfilz, im speziellen Fall ein Kompaktierfilz, aus einem Grundgewebe 1 und aus einer darauf aufgenadelten Filzlage 2. Bei einem Beispiel der Erfindung, wie hier dargestellt, besteht das Grundgewebe 1 aus einem Polyester-Monofilament 1a und zwei darüber gelegenen Schichten 1b, 1c eines Polyester-Multifilaments.

Auf das Grundgewebe 1 ist eine Filzlage 2, im vorliegenden Fall aus Polyesterfasern, aufgenadelt. Verfahren zum Aufnadeln von Filzlagen sind dem Fachmann bekannt und müssen hier nicht weiter erläutert werden. In der Praxis kann die Filzlage beispielsweise eine Dicke von 20-25 mm besitzen, wogegen die Dicke des Grundgewebes beispielsweise 3-4 mm betragen kann.

Im Sinne der Erfindung enthält nun die Filzlage 2 eine elastische Maschenware 3, im konkreten Fall ein Gewirke, nämlich einen endlos gewirkten Schlauch, der z.B. aus Polyesterfasern bestehen kann. Die Maschenware muss nicht notwendigerweise aus Kunstfasern bestehen, vielmehr können auch Naturfasern zur Anwendung gelangen. Über der Maschenware 3 befindet sich noch eine oberste Schichte 4, die im vorliegenden Fall aus Aramidfasern besteht, doch ist auch hier die Verwendung auch von anderen Synthetikfasern, z.B. Polyester-, Polyamid-, Polypropylenfasern als auch von Naturfasern möglich. Sobald die Filzlage 2 fertig oder fast fertig aufgenadelt ist, wird die Maschenware 3 in Form eines Wirkschlauches ganz glatt auf die bisher genadelte Filzlage aufgelegt. Nun kann diese Maschenware 3 entweder mit Fasern des gleichen Materials wie die Filzlage 2 etwas angenadelt, d.h. angeheftet werden oder es kann auch eine etwas stärkere oberste Schicht 4 aufgebracht werden, eben auch aus einem anderen Fasermaterial, wie hier aus Aramidfasern.

Das Wesen der Erfindung liegt darin, dass die Maschenware 3 überaus elastisch ist - eine z.B. einem Gewirke inhärente Eigenschaft - und dadurch den Bewegungen der Filzoberfläche leicht folgen kann, die Filzlage 2 jedoch schützt. Die Standzeiten des Kompaktierfilzes können auf diese Weise wesentlich erhöht werden und die Gefahr von Beschädigungen, z. B. Einprägungen auf das zu behandelte Gewebe wird wesentlich verringert.

Es hat sich in der Praxis gezeigt, dass sich anstelle eines Gewirkes auch ein Gestrick sehr gut eignet. Weiters können auch mehrere Gewirk- oder Gestricklagen in verschiedenen Ebenen des Filzes eingebaut werden, z.B. auch in gewickelter Form. Die Anwendung des erfindungsgemäßen Filzes ist nicht auf Maschinen zur Krumpffrei-Behandlung von Textilien beschränkt, d.h. es versteht sich, dass der Filz überall dort eingesetzt werden kann, wo die eingangs genannten Anforderungen an die Filzqualität und -Lebensdauer gestellt werden.

## Patentansprüche

1. Textilmaschinenfilz, bestehend aus zumindest einem Grundgewebe (1) und aus einer darauf aufgenadelten Filzlage (2),
**dadurch gekennzeichnet, dass**
die Filzlage (2) zumindest in ihrem Oberflächenbereich eine elastische Maschenware (3) enthält.

2. Textilmaschinenfilz nach Anspruch 1, **dadurch gekennzeichnet, dass** die Maschenware (3) ein endlos gewirkter Schlauch ist.

3. Textilmaschinenfilz nach Anspruch 1 oder 2, **dadurch gekennzeichnet, dass** die Maschenware (3) aus Polyesterfasern besteht.

4. Textilmaschinenfilz nach einem der Ansprüche 1 bis 3, **dadurch gekennzeichnet, dass** die Maschenware (3) unter Bildung einer obersten Schicht auf die Oberfläche der Filzlage (2) aufgenadelt ist.

5. Textilmaschinenfilz nach Anspruch 4, **dadurch gekennzeichnet, dass** die Maschenware (3) mit Aramidfasern (4) auf die Filzlage (2) aufgenadelt ist.

6. Textilmaschinenfilz nach einem der Ansprüche 1 bis 5, **dadurch gekennzeichnet, dass** das Grundgewebe (1) aus einem Monofilament (la) und einem darüber gelegenen Mulitfilament (1b) besteht.

7. Textilmaschinenfilz nach Anspruch 5 oder 6, **dadurch gekennzeichnet, dass** das Grundgewebe (1) ein Polyester-Gewebe ist.

8. Verwendung eines Textilmaschinenfilzes nach einem der Ansprüche 1 bis 7 als Kompaktierfilz auf Maschinen zur Krumpffrei-Behandlung von Textilien.

## Claims

1. Textile machine felt consisting of at least one ground textile (1) and i felt layer (2) stitched thereon,
**characterised in that**
the felt layer (2) comprises an elastic knit fabric (3) at least in its surface region.

2. Textile machine felt according to claim 1, **characterised in that** the knit fabric (3) is a continuous warp knitted sleeve.

3. Textile machine felt according to claim 1 or 2, **characterised in that** the knit fabric (3) consists of polyester fibres.

4. Textile machine felt according to any one of claims 1 to 3, **characterised in that** the knit fabric (3) is stitched onto the surface ofthe felt layer (2) to form an uppermost layer.

5. Textile machine felt according to claim 4, **characterised in that** the knit fabric (3) is stitched onto the felt layer (2) using aramide fibres (4).

6. Textile machine felt according to any one of claims 1 to 5, **characterised in that** the ground textile (1) consists of a monofilament (1a) with a multi-filament (1b) lying thereon.

7. Textile machine felt according to claim 5 or 6, **characterised in that** the ground textile (1) is a polyester fabric.

8. Use of a textile machine felt according to any one of claims 1 to 7 as a compacting felt on machines for rendering textiles shrinkproof.

## Revendications

1. Feutre pour machine textile, constitué par au moins un tissu de base (1) et une couche de feutre (2) appliquée sur le tissu, **caractérisé en ce que** la couche de feutre (2) contient, au moins dans sa partie superficielle, un tissu maillé élastique (3).

2. Feutre pour machine textile selon la revendication 1, **caractérisé en ce que** le tissu maillé (3) est un tricot cousu sans fin.

3. Feutre pour machine textile selon la revendication 1 ou 2, **caractérisé en ce que** le tissu maillé (3) est formé de fibres de polyester.

4. Feutre pour machine textile selon l'une des revendications 1 à 3, **caractérisé en ce que** le tissu maillé (3) est cousu sur la couche de feutre (2) en formant une couche supérieure.

5. Feutre pour machine textile selon la revendication 4, **caractérisé en ce que** le tissu maillé (3) comportant des fibres d'aramide est cousu sur la couche de feutre (2).

6. Feutre pour machine textile selon l'une des revendications 1 à 5, **caractérisé en ce que** le tissu de base (1) est constitué par un monofilament (la) et par un multifilament (1b) disposé au-dessus du monofilament.

7. Feutre pour machine textile selon la revendication 5 ou 6, **caractérisé en ce que** le tissu de base (1) est un tissu formé de polyester.

8. Utilisation d'un feutre pour machine textile selon l'une des revendications 1 à 7, en tant que feutre de compactage pour le traitement de textiles sans rétrécissement.
